# EUROPEAN PATENT APPLICATION

(11) **EP 4 175 341 A1**
(43) Date of publication of application: **03.05.2023**
(21) Application number: 20942605.5
(22) Date of filing: 29.06.2020
(51) Int. Cl.: H04W 16/14, H04W 16/28

(54) **TERMINAL**

(71) Applicant: NTT DOCOMO, INC., Chiyoda-Ku Tokyo 100-6150 (JP)
(72) Inventor: SHIBAIKE Naoya, Tokyo 100-6150 (JP); HARADA Hiroki, Tokyo 100-6150 (JP); NAGATA Satoshi, Tokyo 100-6150 (JP); WANG Jing, Beijing 100190 (CN); HOU Xiaolin, Beijing 100190 (CN)
(74) Representative: Hoffmann Eitle
(86) International application number: PCT/JP2020/025558
(87) International publication number: WO 2022/003788

(57) **Abstract**

A UE 200 receives control information indicating the type of channel access procedure executed in a second frequency band different from a first frequency band allocated for mobile communications; and executes the channel access procedure based on the type of the channel access procedure indicated by the control information.

## Description

### Technical Field

The present disclosure relates to a terminal that executes radio communications, and particularly to a terminal that uses an unlicensed frequency band.

### Background Art

The 3rd Generation Partnership Project (3GPP) has specified 5th generation mobile communication system (5G, New Radio (NR) or also called Next Generation (NG)), and has also advanced specification for the next generation called Beyond 5G, 5G Evolution, or 6G.

Release 15 and Release 16 (NR) of 3GPP specify an operation of a plurality of frequency ranges, specifically, a band including FR1 (410 MHz to 7.125 GHz) and FR2 (24.25 GHz to 52.6 GHz).

In addition, the NR that supports up to 71 GHz over 52.6 GHz is also under study (Non Patent Literature 1). Among these, channel access procedures that comply with regulations (such as execution of Listen-Before-Talk (LBT)) applied to unlicensed spectrum in the frequency band of 52.6 GHz to 71 GHz are being considered.

In addition, with regard to New Radio-Unlicensed (NR-U) that extends a usable frequency band by using the spectrum of such an unlicensed frequency band, in 3GPP Release-16, sharing of a channel occupancy time (COT) between a radio base station (gNB) and a terminal (User Equipment, UE) is defined (Non Patent Literature 2).

In addition, in 3GPP Release-16, it is defined that the UE can transmit uplink control information (UCI) including information on COT sharing via physical uplink shared channel (PUSCH) (Non Patent Literature 3) .

### Citation List

### Non Patent Literature

Non Patent Literature 1: "New SID: Study on supporting NR from 52.6 GHz to 71 GHz", RP-193259, 3GPP TSG RAN Meeting #86, 3GPP, December 2019
Non Patent Literature 2: 3GPP TS 37.213 V16.1.0, 3rd Generation Partnership Project; Technical Specification Group Radio Access Network; Physical layer procedures for control (Release 16), 3GPP, March 2020.
Non Patent Literature 3: 3GPP TS 38.212 V16.0.0, 3rd Generation Partnership Project; Technical Specification Group Radio Access Network; NR; Multiplexing and channel coding (Release 16), 3GPP, December 2019

### Summary of Invention

In the case of high frequency band such as 52.6 GHz to 71 GHz, it is necessary to generate a narrower beam by using a massive antenna having a large number of antenna elements in order to handle a wide bandwidth and large propagation loss.

Therefore, only if the gNB performs carrier sense before starting transmission in the unlicensed frequency band and it can be confirmed that the channel is not used by another system in the vicinity, it is considered that directional LBT/CCA (may be called beam-based LBT/CCA) using a plurality of beams is required even for LBT (Clear Channel Assessment (CCA)) that enables transmission within a predetermined time length.

However, the gNB cannot recognize the content of the uplink (UL) Directional LBT/CCA executed by the UE.

Furthermore, when COT sharing is applied, there is also a problem that it is difficult for the gNB to assume the beam used by the UE for Directional LBT/CCA.

Therefore, the following disclosure is made in view of such a situation, and even when using a plurality of beams with different directions, it is an object to provide a terminal that can reliably perform directional LBT/CCA of UL.

One aspect of the present disclosure provides a terminal (a UE 200) including a receiving unit (a control signal and reference signal processing unit 240) that receives control information indicating the type of channel access procedure executed in a second frequency band different from a first frequency band allocated for mobile communications; and a control unit (a control unit 270) that executes the channel access procedure based on the type of the channel access procedure indicated by the control information.

### Brief Description of Drawings

Fig. 1 is an overall schematic configuration diagram of a radio communication system 10.
Fig. 2 is a diagram illustrating frequency ranges used in the radio communication system 10.
Fig. 3 is a diagram illustrating a configuration example of radio frames, subframes, and slots used in the radio communication system 10.
Fig. 4 is a functional block configuration diagram of a UE 200.
Fig. 5 is a diagram illustrating a configuration example of a COT led by the gNB.
Fig. 6 is a diagram illustrating an execution example of a channel access procedure by LBE and FBE.
Fig. 7 is a diagram illustrating a configuration example of a conventional Directional LBT/CCA.
Fig. 8 is a diagram illustrating a schematic communication sequence between a network including the Directional LBT/CCA and the UE 200 according to an embodiment.
Fig. 9 is a diagram illustrating a configuration example of the Directional-LBT according to Operation Example 2.
Fig. 10 is a diagram illustrating an example of a hardware configuration of the UE 200.

### Description of Embodiments

Hereinafter, embodiments will be described with reference to the drawings. Note that the same functions or configurations will be denoted by the same or similar reference numerals, and a description thereof will be appropriately omitted.

### (1) Overall schematic configuration of radio communication system

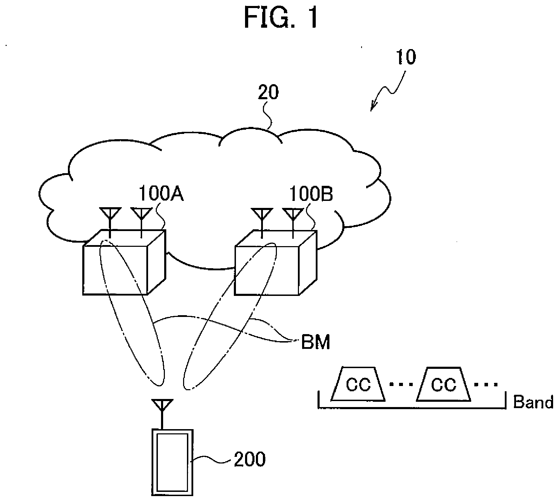

Fig. 1 is an overall schematic configuration diagram of a radio communication system 10 according to the present embodiment. A radio communication system 10 is a radio communication system according to 5G New Radio (NR), and includes a Next Generation-Radio Access Network 20 (hereinafter, NG-RAN 20) and a terminal 200 (hereinafter, UE 200).

The radio communication system 10 may be a radio communication system according to a system called Beyond 5G, 5G Evolution, or 6G.

The NG-RAN 20 includes a radio base station 100A (hereinafter, gNB 100A) and a radio base station 100B (hereinafter, gNB 100B). Note that a specific configuration of the radio communication system 10 including the number of gNBs and UEs is not limited to the example illustrated in Fig. 1.

The NG-RAN 20 actually includes a plurality of NG-RAN nodes, specifically, gNBs (or ng-eNBs), and is connected to a 5G-compliant core network (5GC, not illustrated). Note that the NG-RAN 20 and the 5GC may be simply expressed as a "network".

The gNB 100A and the gNB 100B are radio base stations according to 5G, and perform radio communication according to 5G with the UE 200. The gNBs 100A and 100B and the UE 200 can support massive multiple-input multiple-output (MIMO) that generates beams BM with higher directivity, carrier aggregation (CA) that bundles and uses a plurality of component carriers (CCs), dual connectivity (DC) that simultaneously performs communication between the UE and two NG-RAN nodes, and the like, by controlling radio signals transmitted from a plurality of antenna elements.

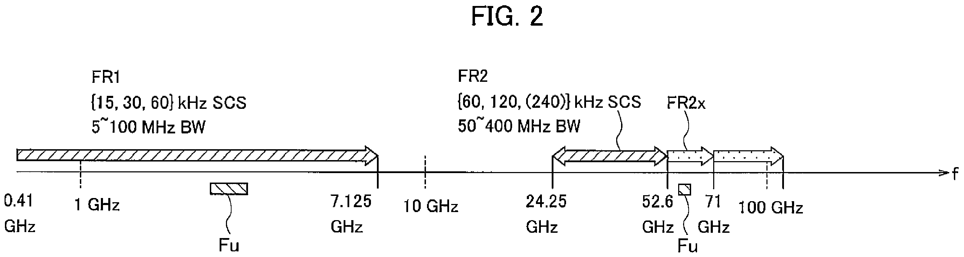

In addition, the radio communication system 10 supports a plurality of frequency ranges (FR). Fig. 2 illustrates frequency ranges used in the radio communication system 10.

As illustrated in Fig. 2, the radio communication system 10 supports FR1 and FR2. A frequency band of each FR is as follows.
·FR1:410 MHz to 7.125 GHz
·FR2:24.25 GHz to 52.6 GHz

In the FR1, a sub-carrier spacing (SCS) of 15, 30, or 60 kHz is used, and a bandwidth (BW) of 5 to 100 MHz may be used. The FR2 has a higher frequency than FR1, SCS of 60 or 120 kHz (240 kHz may be included) is used, and a bandwidth (BW) of 50 to 400 MHz may be used.

Note that the SCS may be interpreted as numerology. The numerology is defined in 3GPP TS38.300 and corresponds to one sub-carrier spacing in a frequency domain.

Further, the radio communication system 10 also supports a higher frequency band than the frequency band of the FR2. Specifically, the radio communication system 10 supports a frequency band exceeding 52.6 GHz and up to 71 GHz. Such a high frequency band may be referred to as "FR2x" for convenience.

In order to solve such a problem, when using a band exceeding 52.6 GHz, Cyclic Prefix-Orthogonal Frequency Division Multiplexing (CP-OFDM)/Discrete Fourier Transform-Spread (DFT-S-OFDM) having a larger sub-carrier spacing (SCS) may be applied.

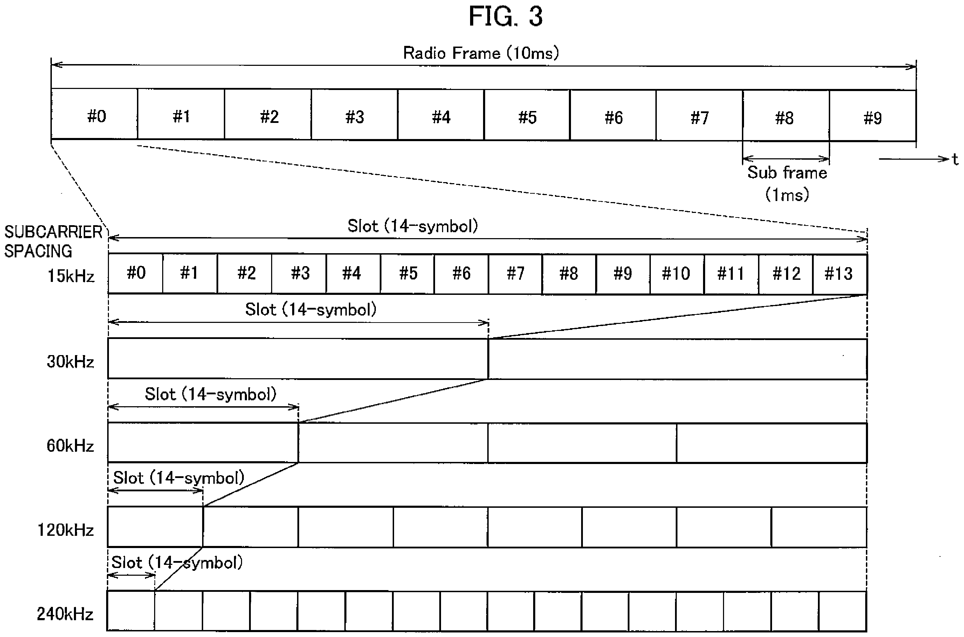

Fig. 3 illustrates a configuration example of radio frames, subframes, and slots used in the radio communication system 10.

As illustrated in Fig. 3, one slot is configured with 14 symbols, and the larger (wider) the SCS, the shorter the symbol period (and the slot period). The SCS is not limited to the spacing (frequency) illustrated in Fig. 3. For example, 480 kHz, 960 kHz, or the like may be used.

In addition, the number of symbols configuring one slot does not necessarily have to be 14 symbols (e.g., 28 and 56 symbols). Further, the number of slots per subframe may vary depending on the SCS.

Note that a time direction (t) illustrated in Fig. 3 may be called a time domain, a symbol period, a symbol time, or the like. In addition, a frequency direction may be called a frequency domain, a resource block, a sub-carrier, a bandwidth part (BWP), or the like.

In addition, in the radio communication system 10, in addition to the frequency band allocated for the radio communication system 10 (for mobile communications), an unlicensed frequency band Fu different from the frequency band is also used. Specifically, in the radio communication system 10, New Radio-Unlicensed (NR-U) that extends a usable frequency band by using a spectrum of an unlicensed (no license) frequency band can be executed. The NR-U may be interpreted as a type of Licensed-Assisted Access (LAA).

The frequency band allocated for the radio communication system 10 is a frequency band included in the frequency range of FR1 and FR2 described above and based on a license allocation by a government.

The unlicensed frequency band Fu is a frequency band that does not require the license allocation by the government and can be used without being limited to a specific telecommunications carrier. For example, a frequency band (2.4 GHz, 5 GHz band, 60 GHz band, or the like) for wireless LAN (WLAN) can be mentioned.

In the unlicensed frequency band Fu, radio stations can be installed while being not limited to the specific communication carrier, but it is not desirable that signals from nearby radio stations interfere with each other to significantly deteriorate communication performance.

Therefore, in Japan, for example, as a requirement for a radio system that uses the unlicensed frequency band Fu (e.g., a 5 GHz band), only if the gNB 100A performs carrier sense before starting transmission, and it can be confirmed that the channel is not being used by another system in the vicinity, a Listen-Before-Talk (LBT) mechanism that enables transmission within a predetermined time length is applied. Note that the carrier sense is a technique for confirming whether the frequency carrier is used for other communications before emitting a radio wave.

Note that the LBT may include Directional LBT/CCA (Clear Channel Assessment) using a plurality of beams BM having different directions.

The LBT band (LBT sub-band) in the NR-U can be provided in the unlicensed frequency band Fu, and may be expressed as a band for checking the presence or absence of use in the unlicensed frequency band Fu. The LBT sub-band may be, for example, 20 MHz, 10 MHz, which is half thereof, or 5 MHz, which is 1/4 thereof.

In addition, the synchronization signal block (SSB) is also used for initial access in the NR-U, as in 3GPP Release-15.

The SSB is configured with a synchronization signal (SS) and a downlink physical broadcast channel (PBCH).

The SS is configured with a primary synchronization signal (PSS) and a secondary synchronization signal (SSS).

The PSS is a known signal that the UE 200 first attempts to detect in a cell search procedure. The SSS is a known signal transmitted to detect a physical cell ID in the cell search procedure.

The PBCH includes information necessary for the UE 200 to establish frame synchronization with the NR cell formed by the gNB 100A after detecting the SS/PBCH block, such as radio frame number (SFN: System Frame Number), and an index for identifying symbol positions of a plurality of SS/PBCH blocks within a half frame (5 milliseconds).

In addition, the PBCH can also include system parameters needed to receive system information (SIB). Further, the SSB also includes a reference signal for broadcast channel demodulation (DMRS for PBCH). The DMRS for PBCH is a known signal transmitted to measure a radio channel condition for PBCH demodulation.

The terminal assumes that each SSB is associated with a different beam BM. That is, the terminal assumes that each SSB is associated with a beam BM having a different transmission direction (coverage) (assuming pseudo collocation). As a result, the UE 200 that resides in the NR cell can receive any beam BM, acquire the SSB, and start initial access and SSB detection/measurement.

For example, when characteristics of a channel carrying symbols on one antenna port can be inferred from a channel carrying symbols on the other antenna port, the quasi co-location (QCL) means that the two antenna ports are in the same place in a pseudo manner. The QCL may be called quasi-collocation.

Note that the SSB transmission pattern may vary depending on the SCS, frequency range (FR), or other parameters.

### (2) Functional block configuration of radio communication system

Next, a functional block configuration of the radio communication system 10 will be described. Specifically, a functional block configuration of the UE 200 will be described.

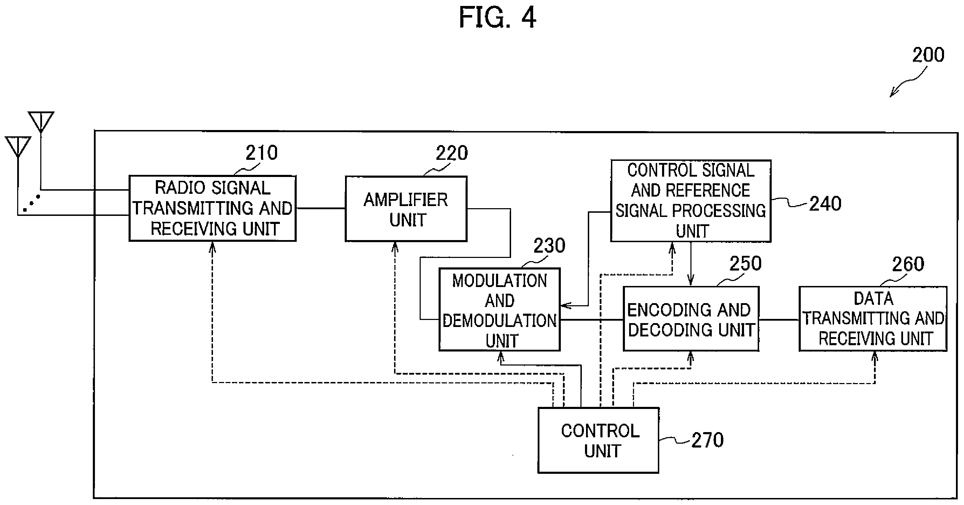

Fig. 4 is a functional block configuration diagram of a UE 200. As illustrated in Fig. 4, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

The radio signal transmitting and receiving unit 210 transmits and receives a radio signal according to NR. The radio signal transmitting and receiving unit 210 supports Massive MIMO, CA used by bundling multiple CCs, DC for performing simultaneous communication between the UE and each of the two NG-RAN nodes, and the like.

The amplifier unit 220 is configured by a power amplifier (PA)/low noise amplifier (LNA) or the like. The amplifier unit 220 amplifies a signal output from the modulation and demodulation unit 230 to a predetermined power level. In addition, the amplifier unit 220 amplifies an RF signal output from the radio signal transmitting and receiving unit 210.

The modulation and demodulation unit 230 executes data modulation and demodulation, transmission power configuration, resource block allocation, and the like for each predetermined communication destination (gNB 100A or another gNB). The modulation and demodulation unit 230 may apply Cyclic Prefix-Orthogonal Frequency Division Multiplexing (CP-OFDM)/Discrete Fourier Transform-Spread (DFT-S-OFDM). In addition, the DFT-S-OFDM may be used not only in the uplink (UL) but also in the downlink (DL).

The control signal and reference signal processing unit 240 executes processing regarding various control signals transmitted and received by the UE 200 and processing regarding various reference signals transmitted and received by the UE 200.

Specifically, the control signal and reference signal processing unit 240 receives various control signals transmitted from the gNB 100A via a predetermined control channel, for example, control signals of the radio resource control layer (RRC). The control signal and reference signal processing unit 240 also transmits various control signals to the gNB 100A via a predetermined control channel.

The control signal and reference signal processing unit 240 executes processing using a reference signal (RS) such as a demodulation reference signal (DMRS) and a phase tracking reference signal (PTRS).

The DMRS is a reference signal (pilot signal) known between a terminal-specific base station and the terminal for estimating a fading channel used for data demodulation. The PTRS is a terminal-specific reference signal for the purpose of estimating phase noise, which is a problem in high frequency bands.

Note that the reference signal may include, in addition to the DMRS and the PTRS, Channel State Information-Reference Signal (CSI-RS), Sounding Reference Signal (SRS), Positioning Reference Signal (PRS) for position information, and the like.

In addition, the channel includes a control channel and a data channel. The control channel includes Physical Downlink Control Channel (PDCCH), Physical Uplink Control Channel (PUCCH), Random Access Channel (RACH) (Downlink Control Information (DCI) including Random Access Radio Network Temporary Identifier (RA-RNTI), and Physical Broadcast Channel (PBCH), and the like.

The data channel includes Physical Downlink Shared Channel (PDSCH), Physical Uplink Shared Channel (PUSCH), and the like. The data means data transmitted via the data channel. The data channel may be read as a shared channel.

Furthermore, for the NR-U, a channel may mean a carrier or part of the carrier that is configured with a set of contiguous resource blocks (RB) in which the channel access procedure is performed in the shared spectrum.

The channel access procedure may be interpreted as a sensing-based procedure that assesses the availability of a channel for making transmissions. In addition, a basic unit for sensing may be defined as a sensing slot having a predetermined time.

In a sensing slot period, the gNB 100A (or the gNB 100B, hereinafter, the same), or the UE 200 detects the channel, and if a detected power is at least less than an energy detection threshold, it may be considered to be idle, otherwise the sensing slot period may be considered to be busy.

In addition, "Channel Occupancy" may mean transmission on a channel by a gNB (which may be an eNB)/UE after executing a corresponding channel access procedure.

"Channel occupancy time (COT)" may mean the total time during which a gNB/UE that shares channel occupancy and an arbitrary gNB/UE perform transmission on a channel after the gNB/UE performs a corresponding channel access procedure. The channel occupancy time may be shared for transmission between the gNB and the corresponding UE.

A DL transmission burst may be defined as a set of transmissions from the gNB. A DL transmission burst with a gap greater than a predetermined transmission gap may be considered as a separate DL transmission burst.

An uplink (UL) transmission burst may be defined as a set of transmissions from the UE. The UL transmission burst with a gap greater than a predetermined transmission gap may be considered as a separate UL transmission burst.

A discovery burst may be defined as a DL transmission burst that contains a set of signals or channels that are confined within a predetermined window and that are associated with a duty cycle.

Any of the following transmissions initiated by the gNB may be designated as the discovery burst.
·Primary sync signal (PSS)
·Secondary sync signal (SSS)
·Downlink physical broadcast channel (PBCH)
·Control resource sets (CORESET) for PDCCH scheduling PDSCH
·PDSCH carrying SIB1 and/or non-zero power CSI-RS

In addition, in the present embodiment, the control signal and reference signal processing unit 240 can receive a control information indicating the type of channel access procedure executed in a frequency band (second frequency band) different from a frequency band (first frequency band) allocated for the radio communication system 10 (for mobile communications) (may be interpreted as LBT/CCA). In the present embodiment, the control signal and reference signal processing unit 240 configures a receiving unit.

Specifically, the control signal and reference signal processing unit 240 can receive downlink control information (DCI) including the type of channel access procedure. Note that the control signal and reference signal processing unit 240 may receive the control information by signaling of an upper layer (RRC) instead of DCI.

The type of channel access procedure may be an LBT (Omni-LBT) using an omnidirectional beam or an LBT (Directional-LBT) using a directional beam BM. Alternatively, it may be the type (Type 1, 2A, 2B, 2C, etc.) of the channel access procedure defined in 3GPP TS37.213.

In addition, the control signal and reference signal processing unit 240 may transmit uplink control information (UCI) including information on the beam BM used in the channel occupancy time (COT) after the channel access procedure to a network (specifically, the gNB 100A or the gNB 100B). In the present embodiment, the control signal and reference signal processing unit 240 configures a transmitting unit.

Specifically, the control signal and reference signal processing unit 240 can transmit a CG (Configured Grant)-UCI including a field indicating the information of the beam to the network.

The encoding and decoding unit 250 executes data division/concatenation, channel coding/decoding, and the like for each predetermined communication destination (gNB 100A or another gNB).

Specifically, the encoding and decoding unit 250 divides the data output from data transmitting and receiving unit 260 into data having a predetermined size, and executes channel coding on the divided data. In addition, the encoding and decoding unit 250 decodes the data output from the modulation and demodulation unit 230 and concatenates the decoded data.

The data transmitting and receiving unit 260 executes transmission and reception of Protocol Data Unit (PDU) and Service Data Unit (SDU). Specifically, the data transmitting and receiving unit 260 executes assembly/disassembly of the PDU/SDU in a plurality of layers (medium access control layer (MAC), radio link control layer (RLC), packet data convergence protocol layer (PDCP), and the like). In addition, the data transmitting and receiving unit 260 executes data error correction and retransmission control based on hybrid automatic repeat request (ARQ).

The control unit 270 controls each functional block configuring the UE 200. In particular, in the present embodiment, the control unit 270 executes the control regarding the NR-U.

Specifically, the control unit 270 can execute the channel access procedure based on the type of the channel access procedure indicated by the control information indicating the type of the channel access procedure (LBT).

Specifically, the control unit 270 determines the type of LBT to be executed based on the type of LBT (e.g., Omni-LBT or Directional-LBT) included in the DCI (or RRC signaling). The control unit 270 can execute the LBT, for example, the Omni-LBT or the Directional-LBT, based on the determined type of LBT. The type of channel access procedure may be the type of channel access procedure defined in 3GPP TS37.213, as described above.

Alternatively, the control unit 270 may determine the configuration of the beam BM used in the channel access procedure based on the information on the uplink reference signal included in the DCI.

Specifically, the control unit 270 may determine the configuration of the beam BM of the channel access procedure (LBT) based on the information of sounding reference signal (SRS) included in the DCI. More specifically, the control unit 270 may determine the configuration of the beam BM applied to the LBT (may correspond to an index of SSB or CSI-RS) based on SRS Resource Indicator (SRI) which is identification information of SRS.

Note that the determination of the configuration of the beam BM is not limited to the SRI, and information of SRS or other UL reference signal (RS) may be used. The control unit 270 may determine the beam BM associated with the uplink reference signal and execute the LBT using the beam BM.

### (3) Operation of radio communication system

Next, an operation of the radio communication system 10 will be described. Specifically, an operation of the gNB 100A (or gNB 100B, hereinafter the same) and the UE 200 regarding the channel access procedure (Directional LBT/CCA) of UL using a plurality of beams BM will be described.

Note that the Directional LBT/CCA according to the present embodiment may be preferably used particularly in a high frequency band such as FR2x.

### (3.1) Assumption

In any of the licensed frequency bands such as FR1 and FR2 for mobile communications and the unlicensed frequency band Fu, for example, a maximum of 64 SSBs, that is, a plurality of beams BM having different directions (directivity) associated with each SSB may be supported.

In addition, as described above, in order to realize channel access complying with LBT/CCA in the unlicensed frequency band Fu, Directional LBT/CCA (may be called beam-based LBT/CCA), that is, the channel access procedure using the plurality of beams BM may be applied.

In 3GPP Release-16 NR-U, channel occupancy time (COT) sharing between the gNB 100A and the UE 200 is permitted under some restrictions. The restrictions are, for example, a transmission period, a type of transmission signal/channel, a priority class, and the like.

The COT period (CO configuration (available LBT sub-band, COT length)) can be indicated to the group of UEs 200 using DCI format 2_0.

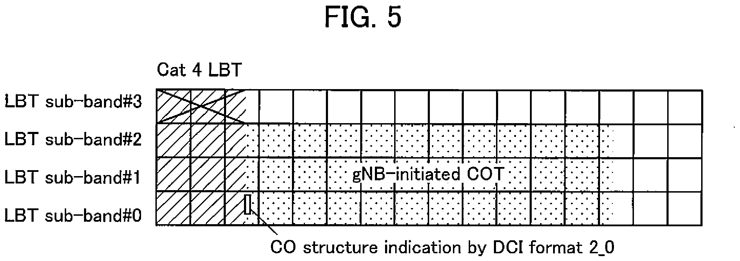

Fig. 5 illustrates a configuration example of a COT led by the gNB. As illustrated in Fig. 5, the "channel occupancy" (CO) configuration can be notified to the UE 200 using DCI format 2_0. In the example illustrated in Fig. 5, LBT is performed in a plurality of LBT sub-bands, and the COT (gNB-initiated COT) is configured after the LBT.

When availableRB-SetPerCell-r16, which is a parameter of the higher layer (RRC), is configured, the parameter may be expressed as follows, for example.
·Available RB set Indicator 1, Available RB set Indicator 2, ..., Available RB set Indicator N1,

When CO-DurationPerCell-r16, which is a parameter of the higher layer (RRC), is configured, the parameter may be expressed as follows, for example.
·COT duration indicator 1, COT duration indicator 2, ..., COT duration indicator N2.

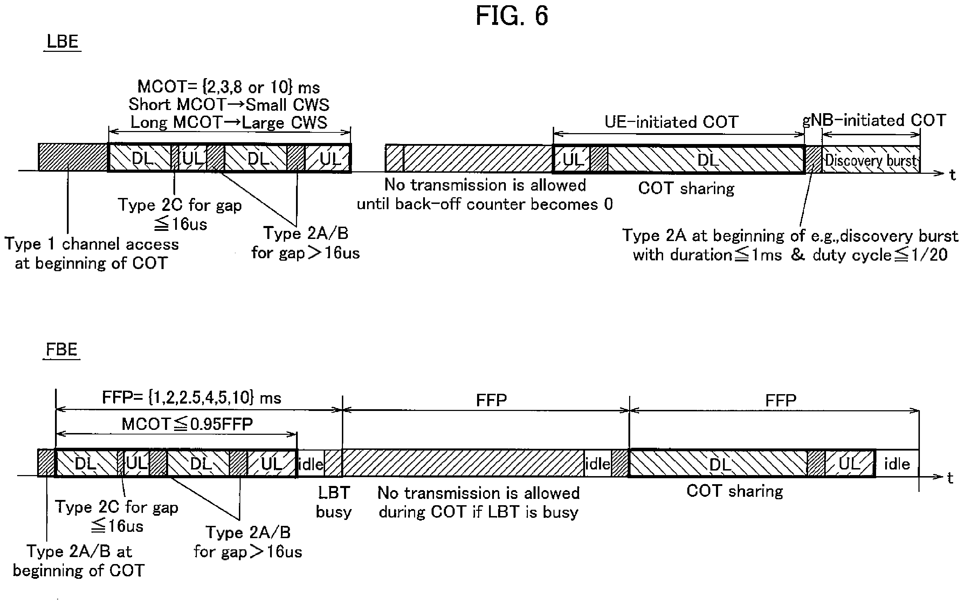

Fig. 6 illustrates an execution example of the channel access procedure by LBE and FBE. Specifically, Fig. 6 illustrates an example of a channel access procedure (LBT/CCA) by load based equipment (LBE) and frame based equipment (FBE) and a COT after the channel access procedure.

The LBE and FBE differ in a configuration of the frame and COT used for transmission and reception.

The FBE has a fixed transmission and reception timing related to the LBT. The LBE does not have a fixed transmission and reception timing related to the LBT and can flexibly execute the LBT according to demand and the like. In the case of LBE, a backoff time may be provided to avoid collisions.

In the example of LBE illustrated in Fig. 6, a plurality of channel access procedures are executed over time, and a contention window size (CWS) can be configured according to a length of the COT. In addition, until the backoff time expires (the backoff counter becomes 0), transmission is not permitted to prevent collisions. In addition, as illustrated in Fig. 6, a COT (gNB-initiated COT) after the channel access procedure led by the gNB is executed, and a COT (UE-initiated COT) after the channel access procedure led by the UE is executed can be configured.

On the other hand, also in the example of FBE illustrated in Fig. 6, a plurality of channel access procedures are executed over time. However, the transmission and reception timing related to the LBT is fixed according to a fixed frame period (FFP).

In addition, in 3GPP Release-16, for UL scheduling, DCI format 0_1 used for PUSCH scheduling has a field of Channel Access Priority Class (CAPC) indicating the type of UL LBT and related parameters.

For example, the DCI format 0_1 defines a field of ChannelAccess-CPext-CAPC field (see 3GPP TS38.212 7.3.1). The field can be configured to 0, 1, 2, 3, 4, 5, or 6 bits and can be determined by an upper layer parameter (ul-dci-triggered-UL-ChannelAccess-CPext-CAPC-r16).

Further, in order to indicate the sharing status (COT sharing) of the channel occupancy time (COT) from the UL to the downlink (DL), the UE 200 can transmit CG (Configured Grant)-UCI via PUSCH. Table 1 illustrates the content of the COT sharing information defined in 3GPP TS38.212.

**[Table 1]**

| **Field** | **Bitwidth** |
|---|---|
| HARQ process number | 4 |
| Redundancy version | 2 |
| New data indicator | 1 |
| Channel Occupancy Time (COT) sharing information | ┌log₂*C*┐ if both higher layer parameter *ULtoDL-CO-SharingED-Threshold-r16* and higher layer parameter *cg-COT-SharingList-r16* are configured, where *C* is the number of combinations configured in *cg-COT-SharingList-r16*; |
| | 1 if higher layer parameter *ULtoDL-CO-SharingED-Threshold-r16* is not configured and higher layer parameter *cg-COT-SharingOffset-r16* is configured; |
| | 0 otherwise; |

In addition, when using a high frequency band such as FR2x, in particular, in order to cope with a wide bandwidth and a large propagation loss, it is assumed that Directional LBT/CCA (beam-based LBT/CCA) using a plurality of beams BMs with different directions is used. This can improve a success rate of channel access even in the high frequency band such as FR2x.

However, in order to realize such a Directional LBT/CCA, there are the following problems regarding the NR-U of 3GPP Release-16. Specifically, it is not possible to instruct the UE 200 on support and/or method of Directional-LBT of UL executed by the UE 200 (Problem 1).

In addition, when the gNB 100A shares the channel occupancy (CO) led by the UE 200 with transmission of the permitted PUSCH and Directional-LBT, the gNB 100A cannot assume the content of transmission of the beam BM permitted in the shared COT (problem 2).

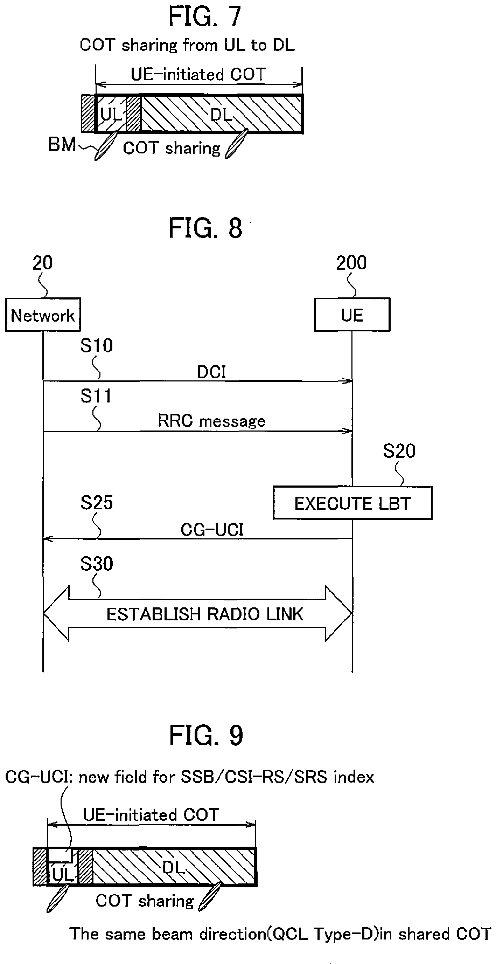

Fig. 7 illustrates a configuration example of a conventional Directional LBT/CCA. Specifically, Fig. 7 illustrates an example in which COT sharing from UL to DL is executed.

In such a case, the gNB 100A cannot determine whether the beam BM of UL and the beam BM of DL are the same (that is, the directions are the same) during the period of COT sharing by the UE-initiated COT.

### (3.2) Operation overview

In the following, an operation example for solving the above-mentioned problems related to the conventional Directional LBT/CCA will be described. First, a schematic communication sequence between the network including the Directional LBT/CCA and the UE 200 according to the present embodiment will be described.

Fig. 8 illustrates a schematic communication sequence between a network including the Directional LBT/CCA and the UE 200 according to an embodiment.

As illustrated in Fig. 8, the network, specifically, the NG-RAN 20 transmits DCI toward UE 200 (S10). The targeted DCI here may be the DCI format 0_1 used for PUSCH scheduling as described above.

The DCI may include control information indicating the type of channel access procedure (LBT) (e.g., Omni-LBT or Directional-LBT). The configuration of the DCI format will be described later.

Alternatively, the NG-RAN 20 may receive the control information by RRC signaling instead of the DCI (or in addition to the DCI) (S11).

The UE 200 executes LBT based on the received control information (S20). Specifically, the UE 200 determines the type of LBT to be executed based on the type of LBT (e.g., Omni-LBT or Directional-LBT) included in the DCI (or the RRC signaling).

The UE 200 executes LBT, for example, Omni-LBT or Directional-LBT, based on the determined type of LBT.

In addition, the UE 200 may transmit uplink control information including the information of the beam BM used in the channel occupancy time (COT) after the channel access procedure (LBT), specifically, CG-UCI toward the network (S25).

As described above, the CG-UCI may include a field indicating information on the beam BM. A configuration of the CG-UCI will be described later.

The gNB 100A and the UE 200 execute a radio link establishment process in the unlicensed frequency band Fu based on a result of LBT (S30). Specifically, the gNB 100A and the UE 200 establish a radio link via a predetermined control channel and data channel, and start to transmit and receive user data and the like via the radio link set in the unlicensed frequency band Fu.

### (3.3) Operation example 1

The present operation example relates to transmission and reception of the DCI (or RRC signaling) for Directional-LBT of UL.

Regardless of the type of LBT, such as Omni-LBT or Directional-LBT, the type of LBT executed for UL transmission may be configured in the UE 200 by any of the following methods.
·(Alt 1): Semi-statically configure by RRC signaling.
·(Alt 2): Instructed from the network by DCI for UL scheduling (e.g., DCI format 0_1).

In this case, the type of LBT may be indicated by a new bit field added to the DCI format 0_1 or an extension field of channel access priority class (CAPC).

For the extension field of CAPC, in one or more entries, a new table indicating Omni-LBT or Directional-LBT may be defined for high frequency band such as FR2x.

When the Directional-LBT is configured/instructed for UL, the beam BM may be configured by any of the following methods.
·(Alt 1): Implicitly instructed by an SRI field of the DCI format 0_1 (the beam BM used for LBT may be assumed to be associated with the beam BM for UL transmission).

Such a method may be applied to at least UL transmission based on a codebook. In addition, an index of the beam BM may be regarded as an index of SRS/SSB/CSI-RS.
·(Alt 2): Explicitly instructed by DCI format 0_1.

In this case, any one of the following methods may be applied.
·(Alt 2.1): The beam BM used for the LBT is assumed to be related to the beam BM for UL transmission, and the beam BM corresponding to the index of the similar reference signal (RS) may be selected.

In this case, a new bit field indicating the index of SRS/SSB/CSI-RS or the extension field of CAPC in which a new table and entry are defined may be used.
·(Alt 2.2): A new RS and/or beam BM is defined for Directional-LBT of UL different from the transmission beam.

In this case, the RRC may configure an association between a new UL_LBT_RS and/or beam for LBT and one or more signals (SRS/SSB/CSI-RS) for the spatial relation for UL transmission.

In addition, in this case, a new field indicating an index of a new UL_LBT_RS and/or beam, or the extension field of CAPC in which a new table and entry are defined may be used.

### (3.4) Operation example 2

The present operation example relates to transmission and reception of UCI for Directional-LBT of UL. When the Directional-LBT is configured/indicated to the UE 200 for UL, the CG-UCI reported by the UE 200 may include a new field to indicate the beam BM used during the COT sharing from UL to DL.

In this case, the index of beam BM may be regarded as an index of SRS/SSB/CSI-RS, as in the operation example 1, or may be an index of a new UL_LBT_RS and/or beam for LBT.

In addition, the gNB 100A shares UE-initiated COT led by the UE 200 (COT sharing), and may comply with a rule that the DL transmission in a COT sharing period should have the same QCL-Type D relation as the beam BM instructed by CG-UCI, in addition to the contents of 3GPP Release-16 when transmitting a permitted (configured grant) PUSCH.

Note that the QCL type is specified as follows in 3GPP TS38.214 chapter 5.1.5.
·QCL-Type A: {Doppler shift, Doppler spread, average delay, delay spread}
·QCL-Type B: {Doppler shift, Doppler spread}
·QCL-Type C: {Doppler shift, average delay}
·QCL-Type D: {Spatial Rx parameter}

Fig. 9 illustrates a configuration example of the Directional-LBT according to the operation example 2. Specifically, Fig. 9 illustrates an example in which the UE-initiated COT is executed and the COT is shared (COT sharing) in UL and DL.

As illustrated in Fig. 9, CG-UCI including a new field for index indication of SRS/SSB/CSI-RS may be transmitted by the UE 200.

In addition, in the case of such a UE-initiated COT, beams in the same direction (that is, beams having the QCL-Type D) may be used within the COT sharing period (shared COT).

### (4) Action/effect

According to the above-described embodiment, the following actions and effects can be obtained. Specifically, the UE 200 can receive a control information indicating the type of channel access procedure executed in a frequency band (second frequency band) different from a frequency band (first frequency band) allocated for the radio communication system 10 (for mobile communications) (may be interpreted as LBT/CCA). In addition, the UE 200 can execute the channel access procedure based on the type of the channel access procedure (LBT) indicated by the received control information.

Therefore, in order to support a high frequency band such as FR2x, even when a plurality of beams BM are used, since the gNB 100A (and gNB 100B, hereinafter the same) can instruct the UE 200 in advance about the type of channel access procedure (LBT), the contents of Directional-LBT of UL executed by the UE 200 can be easily recognized. That is, the UE 200 can reliably execute the Directional LBT/CCA of UL even when using the plurality of beams BM having different directions.

In the present embodiment, the UE 200 can receive the DCI including the type of channel access procedure described above. Therefore, it is possible to reliably instruct the UE 200 of the type of channel access procedure (LBT) while utilizing the existing DCI.

In the present embodiment, the UE 200 can determine the configuration of the beam BM used for the channel access procedure based on the SRS information (SRI) included in the DCI. For this reason, the beam BM used for the channel access procedure can be implicitly instructed by utilizing the SRI included in the existing DCI without directly indicating the index of the beam BM or the like.

In the present embodiment, the UE 200 can transmit the uplink control information (UCI) including the information of the beam BM used in the channel occupancy time (COT) after the channel access procedure toward the network. Therefore, the gNB 100A can easily and surely recognize the information of the beam BM used by the UE 200 in the UE-initiated COT.

### (5) Other embodiments

Hereinabove, although the embodiments have been described, it is obvious to those skilled in the art that the embodiments are not limited to the description of the embodiments and various modifications and improvements can be made.

For example, in the above-described embodiment, the example in which a specific DCI format (e.g., DCI format 0_1) and the UCI (CG-UCI) are used has been described, but as long as similar information such as the type of Directional-LBT can be configured and/or instructed, different types (formats) of DCI/UCI may be used, or other control information may be used.

In addition, the unlicensed frequency band may be called by a different name. For example, terms such as License-exempt or Licensed-Assisted Access (LAA) may be used.

The block diagram used for explaining the embodiment (Fig. 4) illustrates blocks of functional unit. Those functional blocks (structural components) can be realized by a desired combination of at least one of hardware and software. A method for realizing each functional block is not particularly limited. That is, each functional block may be realized by one device combined physically or logically. Alternatively, two or more devices separated physically or logically may be directly or indirectly (for example, wiredly, or wirelessly) connected to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, deeming, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

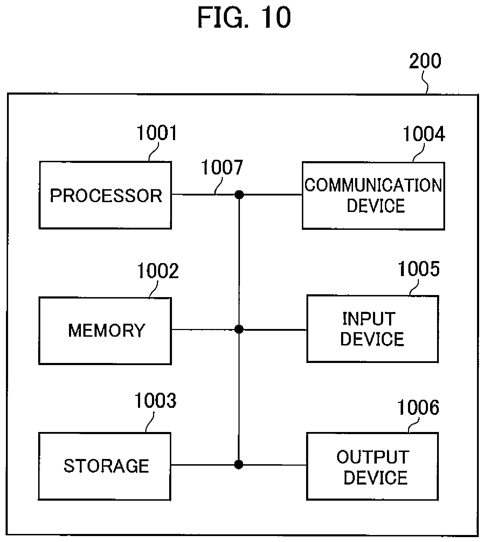

Further, the UE 200 explained above can function as a computer that performs the processing of the radio communication method of the present disclosure. Fig. 10 is a diagram illustrating an example of a hardware configuration of the UE 200. As illustrated in Fig. 10, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks (see Fig. 4) of the UE 200 can be realized by any of hardware elements of the computer device or a combination of the hardware elements.

Moreover, the processor 1001 performs operation by loading predetermined software (program) on hardware such as the processor 1001 and the memory 1002, and realizes various functions of the UE 200 by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various types of processing according to the data. As the program, a program that is capable of executing on the computer at least a part of the operation explained in the above embodiments is used. Alternatively, various types of processing explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of read only memory (ROM), erasable programmable ROM (EPROM), electrically erasable programmable ROM (EEPROM), random access memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as compact disc ROM (CD-ROM), a hard disk drive, a flexible disk, a magnetooptical disk (for example, a compact disk, a digital versatile disk, Bluray (Registered Trademark) disk), a smart card, a flash memory (for example, a card, a stick, a key drive), a floppy (Registered Trademark) disk, and a magnetic strip. The storage 1003 can be called an auxiliary storage device. The recording medium can be, for example, a database including at least one of the memory 1002 and the storage 1003, a server, or other appropriate medium.

The communication device 1004 is hardware (transmission/reception device) capable of performing communication between computers via at least one of a wired network and radio network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of frequency division duplex (FDD) and time division duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (digital signal processor: DSP), application specific integrated circuit (ASIC), programmable logic device (PLD), and field programmable gate array (FPGA). Some or all of these functional blocks may be realized by the hardware. For example, the processor 1001 may be implemented by using at least one of these types of hardware.

Notification of information is not limited to the aspect/embodiment explained in the present disclosure, and may be performed by using a different method. For example, the notification of information may be performed by physical layer signaling (for example, downlink control information (DCI), uplink control information (UCI), higher layer signaling (for example, RRC signaling, medium access control (MAC) signaling, broadcasting information (master information block (MIB), system information block (SIB)), other signals, or a combination of these. The RRC signaling may be called RRC message, for example, or can be RRC Connection Setup message, RRC Connection Reconfiguration message, or the like.

Each of the aspects/embodiments explained in the present disclosure can be applied to at least one of long term evolution (LTE), LTE-Advanced (LTE-A), SUPER 3G, IMT-Advanced, 4th generation mobile communication system (4G), 5th generation mobile communication system (5G), future radio access (FRA), new radio (NR), W-CDMA (Registered Trademark), GSM (Registered Trademark), CDMA2000, ultra mobile broadband (UMB), IEEE 802.11 (Wi-Fi (Registered Trademark)), IEEE 802.16 (WiMAX (Registered Trademark)), IEEE 802.20, ultra-wideband (UWB), Bluetooth (Registered Trademark), a system using any other appropriate system, and a next-generation system that is expanded based on these. Further, a plurality of systems may be combined (for example, a combination of at least one of the LTE and the LTE-A with the 5G) and applied.

As long as there is no inconsistency, the order of processing procedures, sequences, flowcharts, and the like of each of the aspects/embodiments in the present disclosure may be exchanged. For example, the various steps and the sequence of the steps of the methods explained in the present disclosure are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be obviously performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The output information can be deleted. The input information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Regardless of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when software is transmitted from a website, a server, or some other remote source by using at least one of a wired technology (coaxial cable, optical fiber cable, twisted pair, digital subscriber line (DSL), or the like) and a radio technology (infrared light, microwave, or the like), then at least one of these wired technology and radio technology is included within the definition of the transmission medium.

Information, signals, or the like mentioned in the present disclosure may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (component carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (base station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of at least one of a base station and a base station subsystem that performs communication service in this coverage.

In the present disclosure, the terms "mobile station (mobile station: MS)", "user terminal", "user equipment (user equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an internet of things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be configured with one or a plurality of frames in a time domain. Each of the plurality frames in the time domain may be referred to as a subframe. The subframe may also be configured with one or a plurality of slots in the time domain. The subframe may have a fixed time length (for example, 1 ms) that does not depend on a numerology.

The numerology may be a communication parameter applied to at least one of transmission and reception of a certain signal or channel. The numerology includes may indicate, for example, at least one of sub-carrier spacing (SCS), bandwidth, symbol length, cyclic prefix length, transmission time interval (TTI), number of symbols per TTI, radio frame configuration, specific filtering processing that a transceiver performs in a frequency domain, and specific windowing processing that the transceiver performs in the time domain.

The slot may be configured with one or a plurality of symbols (Orthogonal Frequency Division Multiplexing (OFDM) symbols, Single Carrier Frequency Division Multiple Access (SC-FDMA) symbols, etc.) in the time domain. The slot may be a time unit based on a numerology.

The slot may include a plurality of mini-slots. Each mini-slot may be configured with one or a plurality of symbols in the time domain. In addition, the mini-slot may be referred to as a sub-slot. The mini-slot may be configured with a smaller number of symbols than that of the slot. A PDSCH (or PUSCH) transmitted in a time unit larger than the mini-slot may be referred to as PDSCH (or PUSCH) mapping type A. A PDSCH (or PUSCH) transmitted using the mini-slot may be referred to as PDSCH (or PUSCH) mapping type B.

Each of the radio frame, the subframe, the slot, the mini-slot, and the symbol represents a time unit when transmitting a signal. The radio frame, the subframe, the slot, the mini-slot, and the symbol may have different names corresponding thereto, respectively.

For example, one subframe may be called a transmission time interval (TTI), a plurality of consecutive subframes may be called a TTI, and one slot or one mini-slot may be called a TTI. That is, at least one of the subframe and the TTI may be a subframe (1 ms) in the existing LTE, may be a period (for example, one to thirteen symbols) shorter than 1 ms, or may be a period longer than 1 ms. Note that a unit representing the TTI may be referred to as a slot, a mini-slot, or the like rather than the subframe.

Here, the TTI refers to, for example, the minimum time unit of scheduling in radio communication. For example, in an LTE system, a base station performs scheduling that allocates radio resources (frequency bandwidths, transmission power, and the like, that can be used in each user terminal) to each user terminal in a unit of the TTI. Note that a definition of the TTI is not limited thereto.

The TTI may be a transmission time unit of a channel-encoded data packet (transport block), a code block, a codeword, or the like, or may be a processing unit of scheduling, link adaptation, or the like. Note that when the TTI is given, a time section (for example, the number of symbols) in which the transport block, the code block, the codeword, or the like is actually mapped may be shorter than the TTI.

Note that when one slot or one mini-slot is called the TTI, one or more TTIs (that is, one or more slots or one or more mini-slots) may be the minimum time unit for scheduling. In addition, the number of slots (number of mini-slots) constituting the minimum time unit for scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, and the like. A TTI shorter than the normal TTI may be referred to as a shortened TTI, a short TTI, a partial or fractional TTI, a shortened subframe, a short subframe, a mini-slot, a subslot, a slot, and the like.

Note that the long TTI (for example, a normal TTI, a subframe, or the like) may be replaced with a TTI having a time length exceeding 1 ms and the short TTI (for example, a shortened TTI or the like) may be replaced with a TTI having a TTI length shorter than that of the long TTI and having a TTI length of 1 ms or more.

A resource block (RB) is a resource allocation unit in the time domain and the frequency domain, and may include one or a plurality of continuous sub-carriers in the frequency domain. The number of sub-carriers included in the RB may be the same regardless of the numerology, and may be, for example, 12. The number of sub-carriers included in the RB may be determined based on the numerology.

In addition, the time domain of the RB may include one or a plurality of symbols, and may have a length of one slot, one mini-slot, one subframe, or one TTI. One TTI, one subframe, and the like may each be configured with one or a plurality of resource blocks.

Note that one or a plurality of RBs are called a physical resource block (PRB), a sub-carrier group (SCG), a resource element group (REG), a PRB pair, an RB pair, and the like.

In addition, the resource block may be configured with one or a plurality of resource elements (Resource Elements: RE). For example, one RE may be a radio resource area of one sub-carrier and one symbol.

A bandwidth part (Bandwidth Part: BWP) (which may be referred to as a partial bandwidth or the like) may represent a subset of contiguous common resource blocks (RBs) for a certain numerology in a certain carrier. Here, the common RB may be specified by an index of RBs based on a common reference point of the carrier. The PRB may be defined in a certain BWP and numbered within the BWP.

The BWP may include a BWP for UL (UL BWP) and a BWP for DL (DL BWP). For the UE, one or a plurality of BWPs may be configured in one carrier.

At least one of the configured BWPs may be active and the UE may not expect to transmit or receive a predetermined signal/channel outside the active BWP. Note that a "cell", a "carrier", or the like in the present disclosure may be replaced with the "BWP".

The structures of the radio frame, the subframe, the slot, the mini-slot, the symbol, and the like, described above are merely examples. For example, a configuration such as the number of subframes included in the radio frame, the number of slots per subframe or radio frame, the number of mini-slots included in the slot, the number of symbols and RBs included in the slot or the mini-slot, the number of sub-carriers included in the RB, the number of symbols in the TTI, the symbol length, and the cyclic prefix (CP) length can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as reference signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The terms "determining" as used in this disclosure may encompass a wide variety of operations. The "determining" can include, for example, considering performing judging, calculating, computing, processing, deriving, investigating, looking up, search, or inquiry (for example, searching in a table, a database, or another data structure), or ascertaining as performing the "determining". In addition, the "determining" can include considering performing receiving (for example, receiving information), transmitting (for example, transmitting information), input, output, or accessing (for example, accessing data in a memory) as performing the "determining". In addition, the "determining" can include considering performing resolving, selecting, choosing, establishing, or comparing as performing the "determining". That is, the "determining" can include considering some operation as performing the "determining". In addition, the "determining" may be replaced with "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100A, 100B: gNB
- 200: UE
- 210: Radio signal transmitting and receiving unit
- 220: Amplifier unit
- 230: Modulation and demodulation unit
- 240: Control signal and reference signal processing unit
- 250: Encoding and decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal comprising:
a receiving unit that receives control information indicating a type of a channel access procedure executed in a second frequency band different from a first frequency band allocated for mobile communications; and
a control unit that executes the channel access procedure based on the type of the channel access procedure indicated by the control information.

2. The terminal according to claim 1, wherein the receiving unit receives downlink control information including the type of the channel access procedure.

3. The terminal according to claim 2, wherein the control unit determines a configuration of a beam used for the channel access procedure based on information on an uplink reference signal included in the downlink control information.

4. The terminal according to claim 1, further comprising: a transmitting unit that transmits uplink control information including information on a beam used in a channel occupancy time after the channel access procedure toward a network.
